# EUROPEAN PATENT APPLICATION

(11) **EP 4 454 867 A1**
(43) Date of publication of application: **30.10.2024**
(21) Application number: 23170478.4
(22) Date of filing: 27.04.2023
(51) Int. Cl.: B29C 65/60, B29C 65/00, F16B 19/06

(54) **FASTENER BRACKET, FASTENER KIT, AIRCRA.. STRUCTURE AND METHODS**

(71) Applicant: Airbus Operations GmbH, 21129 Hamburg (DE)
(72) Inventor: Vichniakov, Alexei, 21129 Hamburg (DE)
(74) Representative: Marschall, Stefan

(57) **Abstract**

Disclosed is a fastener bracket 10, 10₂ 10₃, 10₄, 10₅, 10₆, 10₇, 10₈ configured to be installed on a holding structure 1. The fastener bracket is formed as a single piece comprising a plate portion 11, 11₂, 11₅ and at least two pins 12, 12₂, 12₃, 12₄, 12₅, 12₇ protruding in parallel from a first surface S of the plate portion 11, 11₂, 11₅. The at least two pins 12, 12₂, 12₃, 12₄, 12₅, 12₇ are at least partially made of a remouldable material.

Further disclosed is a fastener kit 100₂, 100₃, 100₄, 100₅, 100₇ comprising such fastener bracket 10, 10₂ 10₃, 10₄, 10₅, 10₆, 10₇ and at least one counter component 20₂, 20₄, 20₅, 20₆, 20₈, 30₃, 50₇. Moreover, an aircraft structure 1000 comprising at least one fastener bracket or even fastener kit is disclosed, as are an installation method of installing a fastener bracket, and a fastening method of fastening an object to a holding structure 1 of an aircraft structure 1000.

## Description

The present invention concerns a fastener bracket to be installed on a holding structure such as a stiffener (e.g., a frame, a stringer, a rib, or a spar) of a structure of an aircraft. The invention further relates to a fastener kit and an aircraft structure respectively comprising such fastener bracket. Moreover, the invention pertains to an installation method of installing such fastener bracket on a stiffener of an aircraft structure, and a fastening method of fastening an object to a stiffener of an aircraft structure.

To fasten an object to a holding structure, fastener brackets are known which are adapted to be installed on the holding structure and also to hold the respective object. In particular, in aircraft industry, electrical cables and cabin insulation material is typically fastened to a frame of an aircraft's fuselage by means of such fastener brackets being fixed to the frame. Therein, the installation of the fastener bracket is conventionally realised with titanium bolts running through respective holes in the fastener brackets and in the frame, wherein respective collars applied to the bolts prevent that the bolts slip out of the respective holes.

It is an object of the present invention to provide a simplified and time-, weight and cost saving technique for fastening objects to a holding structure. It is a further object to provide a structure of an aircraft implementing said technique.

The object is achieved by a fastener bracket according to claim 1, by a fastener kit according to claim 6, by an aircraft structure according to claim 12, by an installation method according to claim 14, and by a fastening method according to claim 15. Advantageous embodiments are disclosed in the dependent claims, the description, and the drawings.

A fastener bracket according to the present invention is configured to be installed on a holding structure, such as on a stiffener, in particular on a frame, a stringer, a rib, or a spar, respectively, of a fuselage or wing or empennage or other structure of or for an aircraft. The fastener bracket is a single piece which comprises a plate portion and at least two pins protruding in parallel from a first surface of the plate portion. Therein, the pins are at least partially made of a formable material, in particular, a remouldable material. Accordingly, at least a portion of each pin is deformable so as to have a designated modified stable shape. For instance, the remouldable material may be a remouldable plastic (such as a thermoplastic, in particular, PA, PA6, PA66, PEI, PPS, PEEK, PEKK or PAEK) which may comprise reinforcing fibres (in particular, short or endles fibres), or the remouldable material may comprise a metal and/or an alloy, which respectively may be unreinforced or reinforced with fibers or particles.

In particular, the fastener bracket is advantageously adapted to be installed on the holding structure by inserting the pins through respective holes in the holding structure, such that the plate portion is positioned on a first side of the holding structure, and the respective tips of the pins project beyond the holding structure on a second side thereof, which is opposite to the first side.

By applying heat, possibly also pressure, the remouldable material contained in the pins can be deformed so as to inhibit that the pins can slip back out of the holes, and to thereby secure the installation of the fastener bracket on the holding structure. In particular, at least a portion of a respective free end (in particular, a respective tip) of the pins preferably comprises said remouldable material, such that it can be deformed accordingly, for instance, so as to form a knob whose diameter is larger than a diameter of the respective hole the pin is inserted to run through. In particular, the fastener bracket according to the present invention is advantageously adapted to be fixed to the holding structure by heat hot riveting (also known as "heat staking").

Additionally or alternatively, the fastener bracket may be configured to be fixed to the holding structure by mechanically mounting at least one interlocking element, on the holding structure's side facing away from the plate portion, on at least one of the pins.

As the fastener bracket according to the present invention is formed as a single piece, its fixation to the holding structure is simplified and considerably expedited in comparison to conventional fastener brackets installed on a respective holding structure by means of separate bolts and allocated collars. Moreover, the plastic material contained in the pins allows for a weight reduction, which may sum up to several kilograms if a multiplicity of said fastener brackets is used, e.g., to fasten electric cables and thermic insulation material to an aircraft structure such as a fuselage, a wing, or an empennage.

According to advantageous embodiments of the present invention, the fastener bracket further comprises a mount portion protruding from a second surface of its plate portion, which second surface is opposite to said first surface. Therein the mount portion is configured to be connected with an element to be fastened to the holding structure. For instance, the mount portion may comprise a thread said element may be screwed on, and/or a retainer clip and/or a loop respectively adapted to hold said element. The element may in particular be an object such as thermal insulation material (which may be formed as a mat) or an electric cable, for example, or a fixation structure (such as a clip and/or a screw) on its part adapted to be connected to such object; in the latter case, the fixation structure thus serves as an intermediate.

Preferably, also the plate portion is at least partially made of a remouldable material, which may be the same the pins are at least partially made of or different therefrom. Advantageously, the plate portion is at least partially made of a plastic. Therewith, a particularly light weight of the fastener bracket can be achieved.

In particular, the plate portion and the pins may preferably be integrally shaped. For instance, at least respective portions of the plate portion and of the pins may together form a monolithic body, in particular, a body having a continuous material transitions from the plate portion to the pins; such monolithic body may include (e.g., embedded therein) one or more components such as at least one fireproof member and/or at least one fireproof elements as detailed below:
According to advantageous embodiments, the fastener bracket of the present invention comprises one or various fireproof member/s. At least one of the member/s may at least partially extend in at least one of the pins. Additionally or alternatively, in embodiments comprising a mount portion as mentioned above, at least one of the fireproof member may at least partially extend in the mount portion.

The fireproof member(s), which may be formed as a rod or a strap, can advantageously serve to maintain the function of the fastener bracket even if the remouldable material softens due to abnormal (i.e., unplanned) heat. In particular, such embodiments of fastener brackets have an improved fire resistance, as the fireproof member/s can prevent failure of the fastener bracket in case of a fire.

At least one such fireproof member may advantageously be anchored in the plate portion of the fastener bracket, thus in particular extending both in the plate portion and in at least one of the pins.

According to advantageous embodiments, at least one of the fireproof member/s (i.e., the one fireproof member, if only one is comprised, and at least one of the various fireproof members, if various are comprised) is at least partially made of a metallic material, such as titanium, aluminium, an alloy and/or stainless steel, for instance, and/or of at least one non-metallic material such as ceramic. Additionally or alternatively, (the) at least one of the fireproof member/s may be at least partially embedded in the remouldable material comprised by the fastener bracket, in particular, the remouldable material of a respective one of the pins and/or - in respective embodiments - the remouldable material of the plate portion.

At least one of the fireproof member/s may preferably be stabilised by at least one fireproof element included in the plate portion. Thereby, the maintenance of the function of the fastener bracket, as ensured by the at least one fireproof member in case of abnormal heat, is further secured. In particular, the fireproof element may be a fireproof ring the respective fireproof member may preferably run through within the plate portion.

In such embodiments, the at least one fireproof element may be at least partially made of a metallic material, such as titanium, aluminium, an alloy and/or stainless steel, or of a non-metallic material such as ceramic. In embodiments in which the plate portion comprises a remouldable material as mentioned above, the at least one fireproof element may be embedded in said remouldable material.

According to advantageous embodiments, at least one of the fireproof member/s may have a threaded portion protruding from the remouldable material of the respective pin at the free end thereof. This facilitates a further securing of the function of the fastener bracket, as an interlocking element embodied as a nut may be screwed onto the pin to fix the fastener bracket to the holding structure; such interlocking element may form part of a fastener kit further detailed below.

A fastener kit according to the present invention comprises a fastener bracket according to an embodiment of the present invention, and further one or various counter component/s having a hole and being configured to be slipped or screwed onto at least one of the pins.

Accordingly, when the fastener bracket is installed such that the pins thereof run through a respective hole in the holding structure, the counter component/s may advantageously be put (slipped or screwed) on a free end of the respective pin reaching through the holding structure. By thereafter deforming the remouldable material comprised by the pin and/or - in respective embodiments - by mechanically mounting at least one interlocking element on at least one of the pins, the counter component may then be fixed to the fastener bracket and, therewith, to the holding structure at a side thereof opposite to a side where the fastener bracket's plate portion is positioned.

At least one of the one or various counter component/s (i.e., the one or, if the fastener kit comprises various counter components, at least one thereof) may comprise a counter plate which has at least two holes and is configured to be slipped on the at least two pins of the fastener bracket. In particular, the fastener kit may thus be or at least comprise a bracket pair consisting of the fastener bracket and said counter plate. Accordingly, such fastener kit can be fixed to the holding structure with the plate portion of the fastener bracket positioned on a first side of the holding structure and the counter plate positioned on a second side of the holding structure, which second side is opposite to the first side, wherein the plate portion and the counter plate are connected to each other by the pins running through respective holes in the holding structure.

The counter plate may be at least partially made of a metal and/or an alloy, and/or of a plastic (such as a thermoplastic, in particular, PA, PA6, PA66, PEI, PPS, PEEK, PEKK or PAEK) which may comprise reinforcing fibres; thereby, a particularly light weight of the fastener kit can be realised. In particular, the counter plate may be at least partially made of the same material as the remouldable material the pins of the fastener bracket are at least partially made of, or of a material different thereto.

The at least one counter component comprising such counter plate may advantageously further comprise a fixation portion protruding from the counter plate and configured to be connected with an item to be fastened to the holding structure. Accordingly, such embodiment facilitates that such item can be fastened, opposite to the fastener bracket's plate portion, to the holding structure. The fixation portion may preferably be at least partially made of a remouldable material, in particular, of < metal and/or an alloy, and/or of a plastic (such as a thermoplastic, in particular, PA, PA6, PA66, PEI, PPS, PEEK, PEKK or PAEK) which may comprise reinforcing fibres. In particular, the fixation portion may be at least partially made of another or the same material as comprised by the counter plate.

The fixation portion may comprise a thread said item may be screwed on, and/or a retainer clip and/or a loop respectively adapted to hold said item. The item may in particular be an object such as thermal insulation material (which may be formed as a mat) or an electric cable, for example, or a fixation structure (such as a clip and/or a screw) on its part adapted to be connected to such object; in the latter case, the fixation structure thus serves as an intermediate.

In embodiments where the fastener bracket comprises a mount portion protruding from the plate portion's second surface, as mentioned above, said fixation portion may be shaped different or equal to said mount portion. In particular, the mount portion may be configured to be connected to an item of a different type than an element the fixation portion is configured to be connected to, and/or to an item of the same type as said element. As a particular example, the mount portion may be configured to be connected to an electric cable or a fixation structure, and the fixation portion may be configured to be connected to a thermal insulation material or a fixation structure, or vice versa, or both the mount portion and the fixation portion may be configured to be connected to an electric cable and/or to a thermal insulation material and/or to a fixation structure.

According to advantageous embodiments in which the at least one counter component comprises a counter plate as mentioned above, said at least one counter component may advantageously comprise one or various fireproof part/s. In particular, in embodiments where a fixation portion protrudes from the counter plate, such fireproof part may advantageously at least partially be included in the fixation portion. Thereby, the function of the fixation portion can be maintained in case of abnormal (unplanned) heat, such as a fire, even if the fixation portion is further made of a remouldable material as mentioned above. In particular, the fireproof part may form a rod or strap. Such fireproof part at least partially included in the fixation portion may be a first fireproof part, which may be stabilised, in the counter plate, by a further fireproof part. For instance, the further fireproof part may be a fireproof ring the first fireproof part runs through within the counter plate.

The at least one (first and/or second) fireproof part may in particular be made of a metallic material, such as titanium, aluminium, an alloy and/or stainless steel, for example, and/or of at least one non-metallic material such as ceramic.

According to advantageous embodiments of a fastener kit according to the present invention, at least one of the comprised counter component/s may be a ring, in particular, a washer; such ring may serve to (further) prevent failure of the fastener kit in case of abnormal heat (such as a fire) causing a softening/ melting of the remouldable material. The ring may be at least partially made of a metallic material, such as titanium, aluminium, an alloy and/or stainless steel, for example, and/or of at least one non-metallic material such as ceramic.

In embodiments where the fastener kit comprises, as counter components, both such ring and a counter component comprising a counter plate (preferably at least partially made of a remouldable material, in particular, a thermoplastic as mentioned above), the ring may serve to prevent that the counter plate softens or even gets damaged in a step of deforming the pins in order to secure the installation of the fastener bracket on the holding structure as mentioned above.

An aircraft structure according to the present invention comprises one or various holding structure/s with a fastener bracket according to an embodiment of the present invention (respectively) installed thereon, with the at least two pins of the fastener bracket running through respective holes in the respective holding structure. Preferably, the aircraft structure further comprises at least one object fastened - directly or via an intermediate as explained above - to the holding structure by (in particular) the at least one fastener bracket.

The aircraft structure may in particular comprise (in particular: be) a fuselage, a wing and/or an empennage. The one or various holding structure/s may comprise at least one stiffener, in particular, at least one frame, at least one stringer, at least one rib and/or at least one spar.

The aircraft structure may further comprise the one or various counter components of a fastener kit according to an embodiment of the present invention, as detailed above. In this case, at least one of the pins of the fastener bracket runs through the respective hole of at least one of the one or more counter components comprised by the fastener kit, with the holding structure arranged between the counter component and the plate portion of the fastener bracket. The aircraft structure may then further comprise at least one object fastened - directly or via an intermediate as explained above - to the holding structure by (in particular) the one or various counter components of the fastener kit.

Preferably, the at least two pins of the fastener bracket comprised by an aircraft structure according to the present invention are shaped so as to form a bulb at the holding structure's side facing away from the fastener bracket's plate portion, thereby preventing that the at least one fastener bracket slips out of the holes, thus fixing the fastener bracket to the (respective) holding structure and - if the aircraft structure further comprises the one or various counter components - fixing also the counter component/s to the holding structure. Said bulb may result from heat compression. Additionally or alternatively, at least one interlocking element may be mounted, on the holding structure's side facing away from the plate portion, on at least one of the pins.

An installation method according to the present invention serves to install at least one fastener bracket according to an embodiment of the present invention, on a holding structure of an aircraft structure (i.e., a structure of or for an aircraft). For instance, the aircraft structure may comprise (in particular: be) a fuselage, a wing and/or an empennage. The installation method comprises inserting the pins of the fastener bracket through respective holes in the holding structure, and fixing the fastener bracket to the holding structure, thus preventing that the pins can slip out of the holes. Therein, the fixing may be realised by deforming, on the holding structure's side facing away from the plate portion of the fastener bracket, at least one of the pins by applying heat to it. In particular, the deforming may comprise applying thermal heat and pressure to the pins (in particular, heat stamping, heat-conduction-fastening, and/or heating gas fastening), by performing ultrasonic melting of a respective portion of the pins, and/or by applying infrared and pressure to the pins.

Additionally or alternatively, the fixing may be executed by mechanically mounting at least one interlocking element, on the holding structure's side facing away from the plate portion, on at least one of the pins. For instance, such interlocking element may be a brad, and the mounting may comprise piercing the at least one pin with the brad. Additionally or alternatively, the at least one pin may comprise a thread, and said mounting may comprise screwing a screw-nut (being said interlocking element) on said thread. In such embodiments, the screw-nut may preferably be made of a metallic material (such as titanium, aluminium, an alloy and/or stainless steel), and/or of at least one non-metallic material such as ceramic or a plastic, in particular, a thermoplastic.

According to preferred embodiments, the installation method even serves to install a fastener kit according to an embodiment of the present invention to the holding structure. In this case, the method may comprise slipping or screwing the at least one counter component of the fastener kit onto at least one of the pins. Therein, the slipping or screwing may be done prior to fixing the fastener bracket to the holding structure, or it may form part of said fixing.

In order to achieve always a high quality installation, it is preferred when the pins provide a tolerance compensation. This means, the pins are longer than needed if all parts would be manufactured without any tolerance. Therefore, before the counter component (head) is applied, the pins are adjusted on their final length. Here, the end part of the pin that is not needed for creating the counter element is cut off. The end part of the pins that is not needed for deformation is cut off prior to deforming.

A fastening method according to the present invention serves to fasten one or various object/s (directly or via an intermediate) to at least one holding structure of an aircraft structure (such as a fuselage, a wing and/or an empennage). The fastening method comprises installing a fastener bracket (or even a fastener kit) by applying an embodiment of the above-described installation method. The fastening method further comprises fastening the one or various object/s to the holding structure by means of the fastener bracket.

For instance, if the fastener bracket comprises a mount portion as mentioned above, the fastening may comprise connecting at least one of the object/s and/or a fixation structure (connected or connectable to the at least one object) to the mount portion. If the method comprises installing a fastener kit to the holding structure, and if at least one counter element of the fastener kit comprises a fixation portion as mentioned above, the fastening may (additionally or alternatively) comprise connecting at least one of the object/s and/or a fixation structure (connected or connectable to the at least one object) to the fixation portion.

In what follows, preferred embodiments of the present invention are explained with respect to the accompanying drawings. As is to be understood, the various elements and components are depicted as examples only, may be facultative and/or combined in a manner different than that depicted. Moreover, for conciseness reasons, components which evidently correspond to each other are not always described or referenced again for each figure.

Shown is schematically in
- Figures 1a - 1c:: steps of a first installation method according to an exemplary embodiment of the present invention;
- Figures 2a - 2d:: steps of a second installation method according to an exemplary embodiment of the present invention;
- Figure 3:: a fastener kit according to an exemplary embodiment of the present invention as being installed on a holding structure;
- Figures 4a - 4b:: steps of a third installation method according to an exemplary embodiment of the present invention;
- Figure 5:: a fastener kit according to another exemplary embodiment of the present invention before being installed on a holding structure;
- Figures 6a - 6b: steps of a fastening method according to an exemplary embodiment of the present invention;
- Figure 7:: a fastener kit according to a further exemplary embodiment of the present invention being installed on a holding structure; and
- Figure 8:: a portion of a fuselage being an aircraft structure according to an embodiment of the present invention.

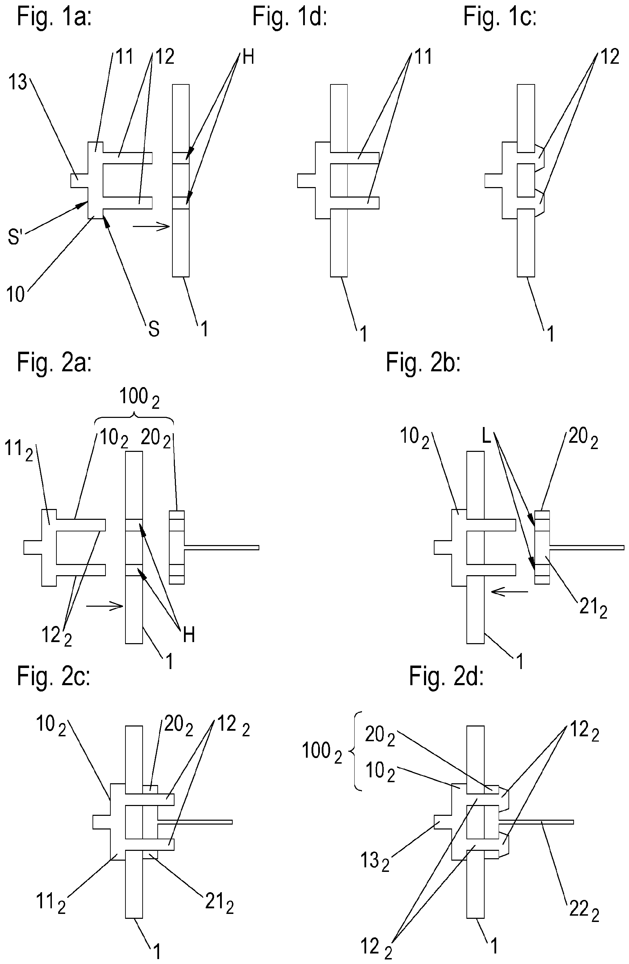

In Figures 1a - 1c, steps of an exemplary first embodiment of an installation method according to the present invention are illustrated by stylised cross sections. The method serves to install a fastener bracket 10 according to an exemplary embodiment of the present invention on a holding structure 1 of an aircraft structure such as a fuselage, a wing, and/or an empennage of or for an aircraft. The holding structure 1 may in particular be a stiffener such as a frame, a stringer, a rib, or a spar.

The fastener bracket 10 is formed as a single piece comprising a plate portion 11, two pins 12 and a mount portion 13. According to the present invention, the pins 12 are at least partially made of a remouldable material (not visible). In the exemplary case shown in Figures 1a - 1c, the fastener bracket 10 is monolithic. It may preferably entirely consist of a metal and/or of an alloy and/or of a (possibly fibre-reinforced) thermoplastic; in the latter case, the fastener bracket 10 is particularly lightweight.

The plate portion 11 has a first surface S and a second surface S' opposite to the first surface. The pins 12 protrude in parallel from the first surface S which in Figure 1a is shown to face the 1. The mount portion 13 protrudes from the second surface S' of the plate portion 11. The mount portion 13 is configured to be connected with an element to be fastened to the holding structure 1 (not shown). For instance, the mount portion may comprise a thread said element may be screwed on, and/or a retainer clip and/or a loop respectively adapted to hold said element (not shown).

As illustrated in Figure 1a, the fastener bracket 10 is moved, in a direction indicated by an arrow, relative to the holding structure 1. By way of a further continued such movement, the pins 12 are inserted into respective holes H arranged within the holding structure 1. In Figure 1b, the insertion is shown to be completed. In this situation, the plate portion 11 abuts on the holding structure 1, which is pierced by the pins 12. The pins12 are adjusted on their final length and the end part of the pins 12 that is not needed for deformation, shown in Figure 1c, is cut off. The end part of the pins 12 that is not needed for deformation is cut off prior to deforming.

As the pins 12 are at least partially made of a remouldable material, the pins can be deformed, e.g. by applying thermal heat and pressure (in particular, heat stamping, heat-conduction-fastening, and/or heating gas fastening), by performing infrared heating and pressure, and/or by performing ultrasonic melting.

In Figure 1c, a situation is depicted in which the pins 12 have thus been deformed at their respective free end. Thus deformed, the pins 12 each form a knob which inhibits that the pins 12 can slip back out of the holes H. Thereby the fixation of the fastener bracket 10 to the holding structure 1 is secured. Due to the fastener bracket 10 being a single piece, little time and effort are required for the installation thereof on the holding structure 1.

In Figures 2a - 2d, steps of an exemplary second embodiment of an installation method according to the present invention are illustrated by stylised cross sections. In this case, a fastener kit 100₂ according to an exemplary embodiment of the present invention is installed on a holding structure 1 of an aircraft structure.

The fastener kit comprises a fastener bracket 10₂ according to an embodiment of the present invention, and a counter component 20₂.

The fastener bracket 10₂ is configured alike the fastener bracket 10 shown in Figures 1a - 1c and described above. In particular, it is formed as a single piece comprising a plate portion 11₂ and two pins 12₂ which are at least partially made of a remouldable material and which are to be inserted in holes H in the holding structure 1, as indicated by an arrow in Figure 2a.

In Figure 2b, the fastener bracket 10₂ is illustrated after the insertion. The counter component 20₂ in this exemplary case comprises a counter plate 21₂ with two holes L. In particular, the fastener kit 100₂ shown in Figures 2a - 2d is configured as a bracket pair.

As indicated in Figure 2b by an arrow, the counter component 20₂ is designated to be slipped onto the pins of the fastener bracket.

Figure 2c shows the fastener kit 100₂ after the counter component 20₂ has been slipped onto the pins 12₂. In this state, the plate portion 11₂ of the fastener bracket 10₂ and the counter plate 21₂ of the counter component 20₂ extend parallel to each other on opposite sides of the holding structure 1, with the pins 12₂ penetrating the holding structure and the counter component 20₂ through the respective holes H, L thereof. The pins 12₂ are adjusted on their final length and the end part of the pins 12₂ that is not needed for deformation, shown in Figure 2d, is cut off. The end part of the pins 12₂ that is not needed for deformation is cut off prior to deforming.

Figure 2d shows the fastener kit being fixed to the holding structure 1 by deforming the pins 12₂ so as to each forming a respective knob inhibiting that the counter component 20₂ can slip off the pins 12₂ and that the pins 12₂ on their part can slip back out of the holes H of the holding structure 1.

A mount portion 13₂ of the fastener bracket 10₂ can be connected with an element, and on the opposite side of the holding structure 1, a fixation portion 22₂ of the counter element 20₂ can be connected with an item (not shown). Therein, the item may coincide with said element or be different therefrom. In particular, said element and said item each may be an object - such as an electric cable or a thermal insulation material - to be fastened to the holding structure 1, or one or both of said element and item may be a respective fixation structure (such as a screw and/or a clip, for instance) adapted to be connected with an object to be fastened to the holding structure 1.

In the exemplary case shown in Figures 2a - 2d, the mount portion 13₂ is of a different type than the fixation portion 22₂. Accordingly, the mount portion 13₂ and the fixation portion 22₂ may serve to fasten different respective objects to the holding structure 1 (not shown).

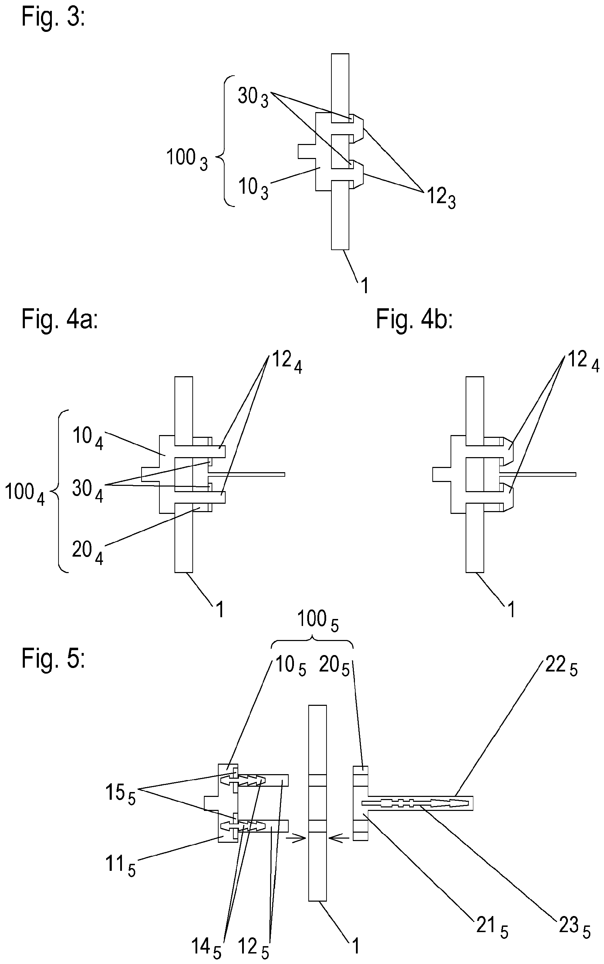

In Figure 3, another fastener kit 100₃ according to an exemplary embodiment of the present invention is shown, the fastener kit 100₃ comprising a fastener bracket 10₃ (which in this case is configured alike the fastener bracket 10 shown in Figures 1a -1c and the fastener bracket 10₂ of the fastener kit 100₂ shown in Figures 2a - 2d and described above) and two counter components 30₃ which in this case each are configured as a ring. The ring may be at least partially made of a metallic material, such as titanium, aluminium, an alloy and/or stainless steel, for example, and/or of at least one non-metallic material such as ceramic.

Figure 3 shows the fastener kit 100₃ in a state in which it is installed on the holding structure 1, wherein the pins 12₃ of the fastener bracket 10₃ have been deformed, by applying heat, after the counter components 30₃ each have been slipped onto a respective one of the pins 12s. Therein, the counter components 30₃ served to prevent detrimental thermal impact during the deformation of the pins 12₃.

In Figures 4a, 4b, steps of a further exemplary embodiment of an installation method according to the present invention are illustrated by stylised cross sections. Therein, a fastener kit 100₄ is installed to a holding structure 1 of a (not shown) aircraft structure.

The fastener kit 100₄ comprises a fastener bracket 10₄ which is configured alike the fastener brackets shown in in the preceding figures and described above. Moreover, the fastener kit 100₄ comprises a first counter component 20₄ configured alike the counter component 20₂ shown in Figures 2a - 2d and described above. Furthermore, the fastener kit 200₄ comprises two further counter component 30₄ which each are configured as a ring.

Figure 4a depicts the fastener kit 100₄ in a situation in which the pins 12₄ have been inserted into holes arranged in the holding structure 1 and thus run through the holding structure, in which further the first counter component 20₄ and the second counter components 30₄ have been slipped onto the pins projecting from the holes. In a further step of the installation method illustrated, the pins 12₄ are deformed. Therein, the second counter components 30₄ serve to prevent a negative impact of the heat applied, in particular a disadvantageous effect the heat might otherwise have on the first counter component 20₄ (which advantageously may be at least partially made of a thermoplastic). The result of the deformation is shown in Figure 4b.

Figure 5 shows a fastener kit 100₅ according to a further exemplary embodiment of the present invention, which comprises a fastener bracket 10 according to an embodiment of the present invention, and a counter element 20₅ comprising a counter plate 21₅. In particular, the fastener kit 100₅ shown in Figure 5 is configured as a bracket pair.

The pins 12₅ of fastener bracket 10₅ are partially made of a remouldable material (not visible) and further each include a portion of a respective fireproof member 14₅ extending in the pin 12₅. The fireproof members 14₅ each are shaped as a rod having different diameters along its longitudinal axis.

Moreover, in the exemplary embodiment shown in Figure 5, the fireproof members 14₅ are stabilised in the plate portion 11₅ of the fastener bracket 10₅ by respective fireproof elements 15₅ embedded in the plate portion 11₅. In the exemplary case depicted, the fireproof elements 15₅ are configured as rings the rod-like fireproof members 14₅ run through.

Furthermore, the counter component 20₅ of the fastener kit 100₅ comprises a fixation portion 22₅ protruding from the counter plate 21 and configured to be connected with an item to be fastened to the holding structure 1. In the case depicted, the counter component 20₅ further comprises a fireproof part 23₅ which is partially included in the fixation portion 22₅, in which it extends. It is shaped as a rod with different diameters along its longitudinal axis.

The fireproof members 14₅, the fireproof elements 15₅ and the fireproof part 23₅ improve a fire resistance of the fastener kit 100₅, as they prevent failure thereof in case of abnormal heat (such as a fire) causing a softening/ melting of the remouldable material included therein. They may in particular be made of the same or different material/s. In particular, one, two or all of them may at least partially be made of a metallic material, such as titanium, aluminium, and alloy, and/or stainless steel, for example, or of a metallic material, such as titanium, aluminium, an alloy and/or stainless steel, for example, and/or of at least one non-metallic material such as ceramic.

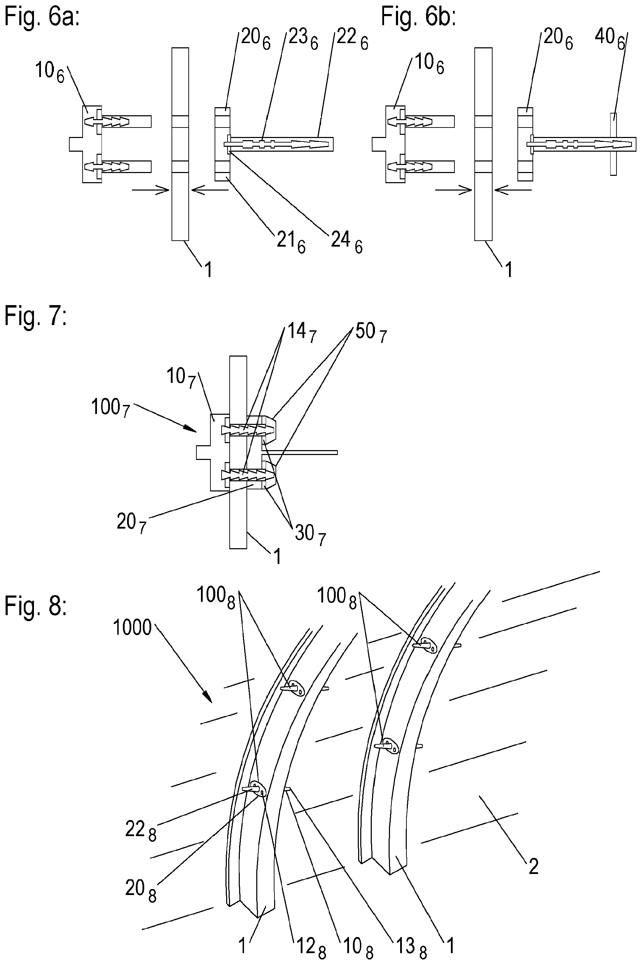

In Figures 6a, 6b, steps of a fastening method according to an embodiment of the present invention are shown. Therein, a further fastener kit comprising a fastener bracket 10₆ and a counter component 20₆ is installed on a holding structure 1. The fastener bracket 10₆ is configured alike the fastener bracket 10₅ shown in Figure 5 and described with respect thereto. The counter component 20₆ comprises a counter plate 21₆, a fixation portion 22₆ and, extending therein, a rod-like fireproof part 23₆. Therein, said rod-like fireproof part 23₆ is a first fireproof part which is stabilised by a further fireproof part 24₆, which in this case is configured as a ring the first fireproof part 23₆ runs through.

In Figure 6b a further exemplary step of the fastening method is shown, in which step an installation ring 40₆ is slipped onto the fixation portion 23₆, which installation ring 40₆ may serve to fastening an insulation material (not shown).

Figure 7 shows a further exemplary fastener kit 100₇ according to the present invention as being installed on a holding structure 1 of an aircraft structure. The fastener kit 100₇ comprises a fastener bracket 10₇ and a first counter component 20₇ which in the situation depicted has been slipped onto the pins of the fastener bracket 10₇. The fastener kit 100₇ further comprises two second counter components 30₇, each being configured as a ring, which in the situation depicted also have been slipped onto the pins of the bracket, and two interlocking components 50₇ which in this case are configured as screw nuts. Therein, the fastening bracket 10₇ includes two fireproof members 14₇ each extending in a respective one of the pins, wherein the free ends of thefireproof members 14₇ comprise a thread (not visible), and the interlocking components 50₇ are mechanically mounted on the pins, more specifically, on the fireproof members thereof, by screwing them on said threads.

Figure 8 depicts a portion of an aircraft structure 1000 according to an exemplary embodiment of the present invention, the aircraft structure in this case being embodied as a fuselage. The aircraft structure 1000 in particular comprises two supporting structures 1 (which in this case are frames) stabilising a shell 2 of the aircraft structure 1000. Various fastener kits 100₈ are installed on each of the frames, the fastener kits 100₈ each comprising a fastener bracket 10₈ with two pins 12₈ and a mount portion 13₈, and a counter component 20₈ with a fixation portion 22₈. The pins 12₈ each extend through the holding structure 1 and through respective holes in the counter component 20₈ which thereby is fixed. The mount portion 13₈ and the fixation portion 22₈ each are configured to be connected with a (respective or same) element/ item (not shown in Figure 8), which may be an object to be fastened to the holding structure (such as an electric cable or a thermal insulation material) or which may be an intermediate, in particular a fixation structure (such as a clip or screw) adapted to be connected with such object.

Disclosed is a fastener bracket 10, 10₂ 10₃, 10₄, 10₅, 10₆, 10₇, 10₈ configured to be installed on a holding structure 1. The fastener bracket is formed as a single piece comprising a plate portion 11, 11₂, 11₅ and at least two pins 12, 12₂, 12₃, 12₄, 12₅, 12₇ protruding in parallel from a first surface S of the plate portion 11, 11₂, 11₅. The at least two pins 12, 12₂, 12₃, 12₄, 12₅, 12₇ are at least partially made of a remouldable material.

Further disclosed is a fastener kit 100₂, 100₃, 100₄, 100₅, 100₇ comprising such fastener bracket 10, 10₂ 10₃, 10₄, 10₅, 10₆, 10₇ and at least one counter component 20₂, 20₄, 20₅, 20₆, 20₈, 30₃, 50₇. Moreover, an aircraft structure 1000 comprising at least one fastener bracket or even fastener kit is disclosed, as are an installation method of installing a fastener bracket, and a fastening method of fastening an object to a holding structure 1 of an aircraft structure 1000.

### References

- 1: holding structure
- 2: shell

- 10, 10₂ 10₃, 10₄, 10₅, 10₆, 10₇, 10₈: fastener bracket
- 11, 11₂, 11₅: plate portion
- 12, 12₂, 12₃, 12₄, 12₅, 12₈: pins
- 13, 13₂, 13₈: mount portion
- 14₅, 14₇: fireproof element
- 15₅: fireproof member

- 20₂, 20₄, 20₅, 20₆, 20₈: counter component
- 21₂, 21₅, 21₆, 21₈: counter plate
- 22₂, 22₅, 22₆, 22₈: fixation portion
- 23₅, 23₆: fireproof part
- 24₆: fireproof part

- 30₃, 30₄, 30₇: counter component (metal ring)
- 40₆: installation ring
- 50₇: counter component (interlocking element)

- 100₂, 100₃, 100₄, 100₇, 100₅: fastener kit

- 1000: aircraft structure

- H: hole in holding structure 1
- L: hole in counter component
- S: first surface of plate portion
- S': second surface of plate portion

## Claims

1. Fastener bracket (10, 10₂ 10₃, 10₄, 10₅, 10₆, 10₇, 10₈) to be installed on a holding structure (1), the fastener bracket formed as a single piece comprising a plate portion (11, 11₂, 11₅) and at least two pins (12, 12₂, 12₃, 12₄, 12₅, 12₇) protruding in parallel from a first surface (S) of the plate portion (11, 11₂, 11₅),
wherein the at least two pins (12, 12₂, 12₃, 12₄, 12₅, 12₇) are at least partially made of a remouldable material.

2. Fastener bracket according to claim 1, further comprising a mount portion (13, 13₂, 13₇) protruding from the plate portion's second surface (S') opposite to the first surface (S) and configured to be connected with an element to be fastened to the holding structure (1).

3. Fastener bracket according to one of claims 1 or 2, wherein the plate portion (11, 11₂, 11₅) is at least partially made of the same or another remouldable material.

4. Fastener bracket according to one of the preceding claims, further comprising one or various fireproof member/s (14₅, 14₇) at least partially extending in a respective one of the pins (12₅) and/or, if the fastener bracket is in accordance with claim 2, in the mount portion thereof.

5. Fastener bracket according to claim 4, wherein at least one of the fireproof member/s (14₅, 14₇) is stabilised in the plate portion by means of at least one fireproof element (15₅) included in the plate portion (11₅).

6. Fastener kit (100₂, 100₃, 100₄, 100₅, 100₇) comprising
- a fastener bracket (10, 10₂ 10₃, 10₄, 10₅, 10₆, 10₇, 10₈) according to one of the preceding claims, and
- one or various counter component/s (20₂, 20₄, 20₅, 20₆, 20₈, 30₃, 50₇) having a hole (L) and being configured to be slipped or screwed onto at least one of the pins (12, 12₂, 12₃, 12₄, 12₅, 12₈) of the fastener bracket.

7. Fastener kit according to claim 6, wherein at least one of the one or various counter component/s (20₂, 20₄, 20₅, 20₆, 20₈) comprises a counter plate (21₂, 21₅, 21₆, 21₈) having two holes (L) and configured to be slipped on both said two pins (12, 12₂, 12₃, 12₄, 12₅, 12₇).

8. Fastener kit according to claim 7, wherein said at least one counter component comprises a fixation portion (22₂, 22₅, 22₆, 22₈) protruding from the counter plate (21₂, 21₅, 21₆, 21₈) and configured to be connected with an item to be fastened to the holding structure (1).

9. Fastener kit according to claim 7 or 8, wherein said counter plate (21₂, 21₅, 21₆, 21₈)
- is at least partially made of said remouldable material the at least two pins are at least partially made of and/or
- is at least partially made of a further remouldable material which is different from said remouldable material the at least two pins are at least partially made of.

10. Fastener kit according to claim 9, wherein said at least one counter component (20₅, 20₆, 30₃, 50₇) comprises at least one fireproof part (23₅, 23₆, 24₆).

11. Aircraft structure (1000) comprising at least one fastener bracket (10, 10₂ 10₃, 10₄, 10₅, 10₆, 10₇, 10₈) according to one of claims 1 to 5 installed on at least one holding structure (1) of the aircraft structure, wherein the at least two pins (12, 12₂, 12₃, 12₄, 12₅, 12₇) of the fastener bracket run through respective holes (H) in the at least one holding structure (1).

12. Aircraft structure (1000) comprising at least one fastener kit (100₂, 100₃, 100₄, 100₇) according to one of claims 6 to 10, wherein the at least two pins (12, 12₂, 12₃, 12₄, 12₅, 12₇) of the fastener kit's fastener bracket (10, 10₂ 10₃, 10₄, 10₅, 10₆, 10₇, 10₈) run through respective holes (H) in at least one holding structure of the aircraft structure, and through a respective hole (L) of at least one of the fastener kit's one or more counter component/s (20₂, 20₄, 20₅, 20₆, 20₈, 30₃, 50₇), with the holding structure (1) arranged between the counter component and the fastener bracket's plate portion (11, 11₂, 11₅).

13. Aircraft structure according to one of claims 11 or 12, wherein the at least two pins (12, 12₂, 12₃, 12₄, 12₅) have a bulb at the holding structure's side facing away from the plate portion (11, 11₂, 11₅), thereby fixing the fastener bracket (10, 10₂ 10₃, 10₄, 10₅, 10₆, 10₇, 10₈) to the at least one holding structure (1).

14. Installation method of installing at least one fastener bracket (10, 10₂ 10₃, 10₄, 10₅, 10₆, 10₇, 10₈) according to one of claims 1 to 5 on a holding structure (1) of an aircraft structure (1000), the method comprising
- inserting the pins (12, 12₂, 12₃, 12₄, 12₅, 12₈) of the fastener bracket through respective holes (H) in the holding structure (1); and
- fixing the fastener bracket (10, 10₂ 10₃, 10₄, 10₅, 10₆, 10₇, 10₈) to the holding structure
• by mechanically mounting, at the holding structure's side facing away from the plate portion (11, 11₂, 11₅), at least one interlocking element (50₇) on at least one of the pins, and/or
• by deforming, on the holding structure's side facing away from the plate portion (11, 11₂), at least one of the pins (12, 12₂, 12₃, 12₄, 12₅, 12₈).

15. Fastening method of fastening an object to at least one holding structure (1) of an aircraft structure (1000), the fastening method comprising applying a method according to claim 14 to install a fastener bracket (10, 10₂ 10₃, 10₄, 10₅, 10₆, 10₇, 10₈) on the holding structure, and fastening the object to the holding structure by means of the fastener bracket.
